# EUROPÄISCHE PATENTANMELDUNG

(11) **EP 0 905 228 A2**
(43) Veröffentlichungstag der Anmeldung: **31.03.1999**
(21) Anmeldenummer: 98115710.0
(22) Anmeldetag: 20.08.1998
(51) Int. Cl.: C12C 7/04

(54) **Maischefertiger**

(30) Priorität: 12.09.1997 DE 19740209
(71) Anmelder: Anton Steinecker Maschinenfabrik GmbH, 85356 Freising-Attaching (DE)
(72) Erfinder: Banke, Friedrich Dipl.-Ing, 84149 Velden (DE); Erl, Franz, 85391 Allershausen (DE)
(74) Vertreter: Grünecker, Kinkeldey, Stockmair & Schwanhäusser Anwaltssozietät

(57) **Zusammenfassung**

Die Erfindung betrifft ein Verfahren zur Herstellung von Naßschrot bei der Bierherstellung, bei dem zum Weichen des Schrotgutes die Temperatur des zu schrotenden Gutes gemessen wird und dann abhängig von der gemessenen Temperatur der Weichvorgang beeinflußt wird. Die erfindungsgemäße Vorrichtung umfaßt dazu einen Temperaturmeßsensor in dem Schrotgutbehälter.

## Beschreibung

Die Erfindung betrifft ein Verfahren zur Herstellung von Naßschrot bei der Bierherstellung, bei dem das Schrotgut in einem Weichbehälter mit Weichwasser einer vorgegebenen Temperatur geweicht wird und dann einem Mahlwerk zugeführt wird entsprechend dem Oberbegriff des Anspruchs 1 und eine Vorrichtung zum Naßschroten von Schrotgut bei der Bierherstellung entsprechend dem Oberbegriff des Anspruchs 13.

Bei der Herstellung von Naßschrot werden kontinuierliche Weichanlagen eingesetzt. Das zu schrotende Gut wird in einem Weichbehälter mit Wasser vermischt und über eine bestimmte Zeit geweicht. Dann wird das geweichte Schrotgut über eine Dosierenrichtung einem Mahlwerk zugeführt. Dort wird das zu schrotende Gut z.B. zwischen zwei Walzen zermahlen. Bei dem Weichprozeß ist die Temperatur ein wichtiger Parameter. Deshalb hat man bisher für einen bestimmten Weichprozeß eine bestimmte Temperatur für das zugefügte Weichwasser vorgegeben.

Es hat sich jedoch gezeigt, dass trotz der festgelegten Temperatur des Weichwassers, das zugefügt wird, keine ausreichend reproduzierbare gute Weichqualität erreichbar ist.

Ausgehend von diesem Stand der Technik ist es daher die Aufgabe der vorliegenden Erfindung, ein Verfahren und eine Vorrichtung zur Herstellung von Naßschrot bei der Bierherstellung zur Verfügung zu stellen, die es ermöglichen, dass gleichmäßigere gute Weichergebnisse erzielt werden.

Diese Aufgabe wird durch ein Verfahren mit den Merkmalen des Anspruchs 1 bzw. durch eine Vorrichtung mit den Merkmalen des Anspruchs 13 gelöst. Vorteilhafte Weiterbildungen sind Gegenstand der Unteransprüche.

Bei dem erfindungsgemäßen Verfahren wird vor dem Weichen des Schrotgutes die Temperatur des zu schrotenden Gutes gemessen und dann abhängig von der gemessenen Temperatur der Weichvorgang beeinflusst.

Auf diese Weise werden die Einflüsse der wechselnden Temperatur des Schrotgutes vor dem Weichvorgang verringert. Auch bei Schrotungsverfahren, bei denen verfahrensbedingt nur relativ kleine Mengen des Weichwassers zugegeben werden, kann die Temperatur des zu schrotenden Gutes zur Anpassung der Parameter des Weichvorganges eingesetzt werden, so dass unterschiedliche Temperaturen des zu schrotenden Gutes die Weichqualität nicht beeinflussen.

Gemäß einer vorteilhaften Ausgestaltung des erfindungsgemäßen Verfahrens fließt die Temperatur des zu schrotenden Gutes in die Festlegung der Temperatur des Weichwassers ein. Die Temperatur des zu schrotenden Gutes hat einen wesentlichen Einfluß auf die Temperatur, die sich während des Weichens einstellt. Wird z.B. das Schrotgut in den freistehenden Silos gelagert, stellen sich in Abhängigkeit der Jahreszeit witterungsbedingte schwankende Außentemperatur verschiedene Produkttemperaturen ein, die bei gleicher Weichwassertemperatur zu unterschiedlichen Weichergebnissen führen würden. Eine Anpassung der Weichwassertemperatur zum Ausgleich der Temperaturunterschiede, die sich im Schrotgut einstellen können, führt zu einer gleichmäßigeren und reproduzierbareren Temperatur des Weichgutes nach dem Weichen.

Vorteilhafterweise wird die Temperatur des Weichwassers dabei so festgelegt, dass sich, abhängig von dem Wärmeübergang auf das Schrotgut und dem jeweiligen Weichgut, eine gewünschte Weichtemperatur einstellt. Die Genauigkeit der Bestimmung der Weichwassertemperatur wird durch die Einbeziehung dieser Parameter erhöht.

Weiterhin ist es vorteilhaft, wenn die Temperatur des Weichwassers kontinuierlich nachgeregelt wird. Ändert sich die Temperatur des Schrotgutes, das dem Weichbehälter kontinuierlich zugeführt wird, z.B. durch Witterungseinflüsse auf einen im Freien stehenden Silo, so wird diese Temperaturänderung automatisch bei der Festlegung der Weichwassertemperatur mit einbezogen, so dass eine optimale Weichqualität erreicht wird.

Einfacherweise wird die Temperatur des Weichwassers mit Hilfe des Mischungsverhältnisses zwischen kaltem und warmem Wasser eingestellt.

Gemäß einer weiteren Ausgestaltung des erfindungsgemäßen Verfahrens fließt die Temperatur des zu schrotenden Gutes in die Festlegung der Weichzeit ein.

Abhängig von der Temperatur des zu weichenden Schrotgutes ist die Weichzeit bei gegebener Temperatur des Weichwassers unterschiedlich lang, bis eine gewünschte Temperatur des geweichten Schroten erreicht ist. Eine Bestimmung der Temperatur des Schrotgutes vor dem Weichen und deren Einbeziehung in die Bestimmung der Weichzeit erhöht daher die Reproduzierbarkeit der Weichqualität.

Vorteilhafterweise wird die Weichzeit dabei zumindest aus der Temperatur des Schrotgutes und einer Temperatur des zuzuführenden Weichwassers bestimmt. Eine Einbeziehung der Temperatur des Weichwassers erhöht die Genauigkeit der Weichzeitbestimmung, auch in dem Fall, dass die Weichwassertemperatur nicht bei jeder Anwendung gleich ist.

Besonders vorteilhaft ist es, wenn für die Temperatur des Weichwassers die maximale Temperatur gewählt wird, die dem Schrotgut nicht schadet. Auf diese Weise kann die Temperatur des Weichwassers maximal gewählt werden, so dass die gewünschte Temperatur für das geweichte Gut sich möglichst schnell einstellt. Eine Begrenzung auf die Maximaltemperatur sichert, dass das Schrotgut keinen Schaden nimmt.

Einfacherweise wird zur Einstellung der Weichzeit der Zulauf von Schrotgut in den Weichbehälter so gesteuert, dass sich das Schrotgut und das Weichwasser die gewünschte Weichdauer lang im Weichbehälter befinden. Zur Aufrechterhaltung einer gleichbleibenden Leistung ist es wünschenswert, wenn das Mahlwerk mit einer gleichbleibenden Menge befeuchteten Schrotgutes versorgt wird. Die Fördermenge aus dem Weichbehälter sollte also im wesentlichen konstant bleiben. Durch eine Regelung des Zulaufes läßt sich jedoch trotzdem die Aufenthaltsdauer des zu schrotenden Gutes in dem Weichbehälter verändern. Die Fließgeschwindigkeit des zu schrotenden Gutes innerhalb des Weichbehälters wird durch die konstante Abförderungsgeschwindigkeit bestimmt und daher unabhängig vom Niveau in dem Weichbehälter. Ein höheres Niveau bedeutet also eine höhere Verweildauer des zu schrotenden Gutes in dem Weichwasser. Durch unterschiedliche Niveaus im Weichbehälterwerden also bei gleichbleibender Ablaufleistung aus dem Weichbehälter und somit auch gleichbleibender Fließgeschwindigkeit des befeuchteten Schrotgutes im Weichbehälter die unterschiedlichen Weichzeiten realisiert.

Vorteilhaft ist es dabei, wenn der Füllstand in dem Weichbehälter kontinuierlich gemessen wird und zur Regelung des Zulaufes in den Weichbehälter eingesetzt wird. Eine solche kontinuierliche Messung des Füllstandes ermöglicht die Kontrolle des Füllstandes und erhöht somit die Gleichmäßigkeit des Weichprozesses.

Eine weitere vorteilhafte Weiterbildung des Verfahrens umfasst die zusätzliche Einbeziehung des Feuchtigkeitsgehaltes des zu schrotenden Gutes zur Beeinflussung des Weichvorganges. Eine zusätzliche Erfassung des Feuchtigkeitsgehaltes erhöht die Reproduzierbarkeit des Weichprozesses, auch wenn Schrotgut verschiedener Anfangsfeuchtigkeit eingesetzt wird.

Ebenso kann vorteilhafterweise vorgesehen werden, daß in die Bestimmung der Weichzeit die Antriebsleistung des Mahlwerkes einfließt. So können die Einflüsse der unterschiedlichen Mahlwerkleistungen auf den Schrotungsgrad verringert werden.

Bei der erfindungsgemäßen Vorrichtung zur Durchführung des erfindungsgemäßen Verfahrens ist eine Temperaturmesseinrichtung im Schrotgutbehälter zur Bestimmung der Temperatur des zu schrotenden Gutes vor dem Weichen vorgesehen.

Vorteilhafte Weiterbildungen der Vorrichtung ermöglichen die Durchführung des erfindungsgemäßen Verfahrens in seinen verschiedenen Ausgestaltungen.

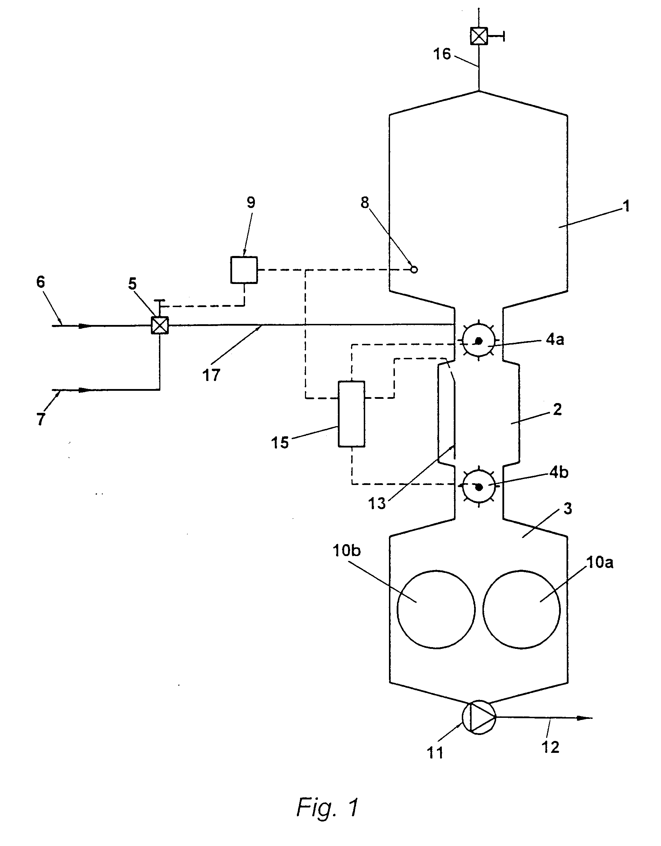

Im Folgenden wird eine erfindungsgemäße Vorrichtung anhand der Figur erläutert und ein erfindungsgemäßes Verfahren beschrieben.

Dabei zeigt die Figur eine erfindungsgemäße Vorrichtung zum Naßschroten.

Die Figur zeigt einen Schrotgutbehälter 1, der oberhalb eines Weichbehälters 2 angeordnet ist. Zur Dosierung des einzubringenden Schrotes ist eine Speisewalze 4a vorgesehen. Eine weitere Speisewalze 4b ist in der Verbindung zwischen dem Weichbehälter 2 und der Mahleinrichtung 3 vorgesehen. In der Mahleinrichtung befinden sich zwei Walzen 10a, 10b zwischen denen das Schrotgut gemahlen wird. Im Bodenbereich der Mahleinrichtung 3 ist eine Pumpe 11 vorgesehen, die über eine Leitung 12 das gemahlene Gut weiterführt. Im Bereich der ersten Speisewalze 4a ist ein Wasserzulauf 17 vorgesehen. Dieser Wasserzulauf wird von einer Kaltwasserleitung 6 und einer Warmwasserleitung 7 über ein Mischventil 5 gespeist. In dem Schrotgutbehälter 1 ist ein Temperatursensor 8 vorgesehen, der mit einem Prozessrechner 9 zur Steuerung des Mischventiles 5 verbunden ist. Weiterhin ist der Temperatursensor 8 mit einem Prozessrechner 15 zur Steuerung der ersten und zweiten Speisewalze 4a, 4b verbunden. In dem Weichbehälter 2 ist eine kontinuierliche Füllstandsmesseinrichtung vorgesehen, die auch mit dem Prozessrechner 15 für die Speisewalzen 4a, 4b verbunden ist. Anstelle der zwei Prozessrechner 9 und 15 kann ebenso ein einzelner Prozessrechner vorgesehen sein, der die Aufgaben beider Rechner übernimmt.

Zusätzlich zu den gezeigten Elementen kann ein Feuchtigkeitssensor im Schrotgutbehälter 1 vorgesehen sein, der auch in Verbindung mit einem Prozessrechner steht.

Im Folgenden wird am Beispiel des Naßschrotens von Malz bei der Bierherstellung ein erfindungsgemäßes Verfahren unter Einsatz der erfindungsgemäßen Vorrichtung beschrieben.

Durch die Zuleitung 16 wird das Malz in den Schrotgutbehälter 1 eingefüllt. In diesem Schrotgutbehälter 1 lagert das Malz bis zu seiner weiteren Verwendung. Die Temperatur des Schrotgutes wird mit Hilfe des Temperatursensors 8 überwacht, so dass z.B. witterungsbedingte Änderungen der Schrotguttemperatur erkannt werden.

Soll nun das Schrotgut gemahlen werden, so wird die Speisewalze 4a in Bewegung gesetzt und das Schrotgut dem Weichbehälter 2 zugeführt. Weiterhin wird Wasser über die Wasserleitung 17 in den Weichbehälter eingeführt. Aus der Temperatur des Schrotgutes in dem Schrotbehälter 1 errechnet der Prozessrechner 9 die notwendige Temperatur des Weichwassers, um die gewünschte Weichtemperatur zu erhalten. Diese Weichtemperatur ist in der Regel rezept- und weichgutabhängig und kann vom Bediener vorgegeben werden. Aus der errechneten Temperatur für das Weichwasser bestimmt der Prozessrechner 9 das Mischungsverhältnis von kaltem und warmem Wasser, das über die Leitungen 6, 7 zugeführt wird. Dementsprechend stellt der Prozessrechner 9 dann das Mischventil 5 ein.

Der Prozessrechner 15 bestimmt wiederum aus der gewählten Temperatur des Weichwassers und der Temperatur des Schrotgutes, die mit dem Temperatursensor 8 gemessen wird, die notwendige Weichzeit bis sich die gewünschte Temperatur des Weichgutes eingestellt haben wird. Dabei können natürlich auch andere weichgutabhängige Parameter einfließen, die im Vorhinein festgelegt werden. Ebenso kann der Feuchtigkeitsgehalt des zu schrotenden Gutes und/oder die Antriebsleistung des Mahlwerkes in diese Bestimmung einfließen.

Der Prozessrechner 15 bestimmt aus der so errechneten Weichzeit die Geschwindigkeiten, mit der das Weichgut dem Weichbehälter 2 zugeführt werden muss und regelt dementsprechend die Geschwindigkeit der oberen Speisewalze 4a, bis ein entsprechendes Niveau im Weichbehälter 2 erreicht ist. Durch unterschiedliche Niveaus im Weichbehälter werden die unterschiedlichen Weichzeiten realisiert, wobei die Mühlenleistung und somit auch die Fließgeschwindigkeit des befeuchteten Schrotgutes im Weichbehälter gleich bleibt. Bei einem höheren Niveau im Weichbehälter 2 ist die Verweilzeit des Schrotgutes größer. Die Fließgeschwindigkeit wird dabei im wesentlichen durch die konstante Abfördergeschwindigkeit der unteren Speisewalze 4b festgelegt. Die Verweilzeit ergibt sich dabei als Quotient aus den Niveau in dem Weichbehälter 2 und der im wesentlichen konstanten Fließgeschwindigkeit. Das Niveau im Weichbehälter 2 wird mit Hilfe des Füllstandsmessers 13 kontinuierlich überwacht und durch Variation der Zuführgeschwindigkeit in den Weichbehälter 2 mit Hilfe der ersten Speisewalze 4a durch den Prozeßrechner 15 gesteuert.

Es kann vorgesehen sein, daß zusätzlich die Geschwindigkeit der unteren Speisewalze 4b zur Regelung des Abflusses aus dem Weichbehälter 2 in das Mahlwerk 3 von dem Prozeßrechner 15 zur Festlegung der Verweildauer des Naßschrotgutes in dem Weichbehälter 2 eingesetzt wird.

Mit dem erfindungsgemäßen Verfahren bzw. der erfindungsgemäßen Vorrichtung ist eine genaue Einregelung der Weichtemperatur und der dazu benötigten Weichzeit möglich. Dadurch wird die Reproduzierbarkeit der Weichqualität erhöht.

Das geweichte Schrot wird letztendlich in der Mahleinrichtung 3 von den Walzen 10a und 10b gemahlen, bevor es nach der Maischwasserzugabe mit Hilfe der Pumpe 11 und der Leitung 12 in den Maischebottich weitergeführt wird.

## Patentansprüche

1. Verfahren zur Herstellung von Naßschrot bei der Bierherstellung, bei dem das Schrotgut in einem Weichbehälter mit Weichwasser einer vorgegebenen Temperatur geweicht wird und dann einem Mahlwerk zugeführt wird,
**dadurch gekennzeichnet**, daß
zum Weichen die Temperatur des zu schrotenden Gutes gemessen wird und dann abhängig von der gemessenen Temperatur der Weichvorgang beeinflußt wird.

2. Verfahren zur Herstellung von Naßschrot nach Anspruch 1,
**dadurch gekennzeichnet**, daß
die Temperatur des zu schrotenden Gutes in die Festlegung der Temperatur des Weichwassers einfließt.

3. Verfahren zur Herstellung von Naßschrot nach Anspruch 2,
**dadurch gekennzeichnet**, daß
die Temperatur des Weichwassers so festgelegt wird, daß sich abhängig von dem Wärmeübergang und dem jeweiligen Weichgut eine gewünschte Weichtemperatur einstellt.

4. Verfahren zur Herstellung von Naßschrot nach einem der Ansprüche 2 und 3,
**dadurch gekennzeichnet**, daß
die Temperatur des Weichwassers kontinuierlich nachgeregelt wird.

5. Verfahren zur Herstellung von Naßschrot nach einem der Ansprüche 2 bis 4,
**dadurch gekennzeichnet**, daß
die Temperatur des Weichwassers mit Hilfe des Michungsverhältnisses aus kaltem und warmem Wasser eingestellt wird.

6. Verfahren zur Herstellung von Naßschrot nach einem der Ansprüche 1 bis 5,
**dadurch gekennzeichnet**, daß
die Temperatur des zu schrotenden Gutes in die Festlegung der Weichzeit einfließt.

7. Verfahren zur Herstellung von Naßschrot nach Anspruch 6,
**dadurch gekennzeichnet**, daß
die Weichzeit zumindest aus der Temperatur des Schrotgutes und der Temperatur des zuzuführenden Weichwassers bestimmt wird.

8. Verfahren zur Herstellung von Naßschrot nach Anspruch 7,
**dadurch gekennzeichnet**, daß
für die Temperatur des Weichwassers die maximale Temperatur gewählt wird, die dem Schrot nicht schadet.

9. Verfahren zur Herstellung von Naßschrot nach einem der Ansprüche 6 bis 8,
**dadurch gekennzeichnet**, daß
der Zulauf von Schrotgut in den Weichbehälter (2) so gesteuert wird, daß sich das Schrotgut und das Weichwasser die gewünschte Weichzeit lang in dem Weichbehälter (2) befinden.

10. Verfahren zur Herstellung von Naßschrot nach Anspruch 9,
**dadurch gekennzeichnet**, daß
der Füllstand in dem Weichbehälter (2) kontinuierlich gemessen wird und zur Regelung des Zulaufes von Schrotgut in den Weichbehälter (2) eingesetzt wird.

11. Verfahren zur Herstellung von Naßschrot nach einem der Ansprüche 1 bis 10,
**dadurch gekennzeichnet**, daß
zusätzlich der Feuchtigkeitsgehalt des zu schrotenden Gutes zur Beeinflussung des Weichvorganges eingesetzt wird.

12. Verfahren zur Herstellung von Naßschrot nach einem der Ansprüche 1 bis 11,
**dadurch gekennzeichnet**, daß
die Antriebsleistung des Mahlwerkes in die Festlegung der Weichzeit einfließt.

13. Vorrichtung zum Naßschroten von Schrotgut bei der Bierherstellung mit einem Schrotgutbehälter, einem daran anschließenden Weichbehälter, einem damit verbundenen Mahlwerk und einem Wasserzulauf in den Weichbehälter,
**gekennzeichnet durch**
eine Temperaturmeßeinrichtung (8) in dem Schrotgutbehälter (1) zur Bestimmung der Temperatur des zu schrotenden Gutes vor dem Weichen.

14. Vorrichtung zum Naßschroten von Schrotgut nach Anspruch 13,
**gekennzeichnet durch**
eine Temperatursteuerung (9), die zumindest aus dem Signal der Temperaturmeßeinrichtung (8) und einer vorgegebenen Endtemperatur des geweichten Schrotes die Temperatur des zuzuführenden Weichwassers festlegt.

15. Vorrichtung zum Naßschroten von Schrotgut nach Anspruch 14,
**dadurch gekennzeichnet**, daß
die Temperatursteuerung (9) mit einem Mischventil (5) verbunden ist, das kaltes und warmes Wasser mischt, bevor es in den Weichbehälter (2) geführt wird, wobei die Temperatursteuerung (9) das Mischverhältnis so einstellt, daß die gewünschte Temperatur des Weichwassers erreicht wird.

16. Vorrichtung zum Naßschroten von Schrotgut nach einem der Ansprüche 13 bis 15,
**gekennzeichnet durch**
eine Zeitsteuerung (15), die aus dem Signal der Temperaturmeßeinrichtung (8) und der Temperatur des zuzugebenden Weichwassers die Weichzeit in dem Weichbehälter (2) so einstellt, daß nach der Weichzeit ein gewünschter Weichgrad erreicht ist.

17. Vorrichtung zum Naßschroten nach Anspruch 16,
**dadurch gekennzeichnet**, daß
die Zeitsteuerung (15) mit einer Zulaufeinrichtung (4a) verbunden ist, die den Zulauf von Schrotgut in den Weichbehälter (2) regelt, wobei die Zulaufeinrichtung (4a) von der Zeitsteuerung (15) derart angetrieben wird, daß das gewünschte Niveau und damit die gewünschte Weichzeit eingehalten wird.

18. Vorrichtung zum Naßschroten nach Anspruch 17,
**gekennzeichnet durch**
eine kontinuierlich arbeitende Füllstandsmeßeinrichtung (13), die mit der Zeitsteuerung (15) verbunden ist.

19. Vorrichtung nach einem der Ansprüche 13 bis 18,
**gekennzeichnet durch**
einen Feuchtigkeitssensor in dem Schrotgutbehälter (1).

20. Vorrichtung nach Anspruch 16,
**gekennzeichnet durch**
einen Prozeßrechner, der die Temperatursteuerung (9) und die Zeitsteuerung (15) umfaßt.

21. Vorrichtung nach den Ansprüchen 19 und 20,
**dadurch gekennzeichnet**, daß
der Feuchtigkeitssensor an den Prozeßrechner angeschlossen ist.

22. Vorrichtung nach Anspruch 20,
**gekennzeichnet durch**
ein Leistungsmeßgerät zur Messung der Antriebsleistung des Mahlwerkes, wobei das Leistungsmeßgerät an den Prozeßrechner angeschlossen ist und die Ausgabe des Leistungsmeßgerätes in die Bestimmung der Weichzeit einfließt.
